# EUROPEAN PATENT SPECIFICATION

(11) **EP 1 934 892 B1**
(45) Date of publication and mention of the grant of the patent: **02.01.2013**
(21) Application number: 06783976.1
(22) Date of filing: 20.09.2006
(51) Int. Cl.: G06K 19/077

(54) **IDENTITY DOCUMENT COMPRISING A CHIP**
IDENTITÄTSDOKUMENT MIT EINEM CHIP
PIÈCE D IDENTITÉ COMPRENANT UNE PUCE

(30) Priority: 20.09.2005 NL 1029985
(43) Date of publication of application: 25.06.2008
(73) Proprietor: Morpho B.V., 2031 CC Haarlem (NL)
(72) Inventor: WESSELINK, Wilhelmus Johannes, NL-2025 TA Haarlem (NL); BREEN, Jan, NL-5632 LP Eindhoven (NL); VAN DEN BERG, Jan, NL-2807 LH Gouda (NL)
(74) Representative: van Westenbrugge, Andries
(86) International application number: PCT/NL2006/050230
(87) International publication number: WO 2007/061303

(56) References cited:
- EP-A- 0 952 542
- EP-A- 1 013 472
- EP-A- 1 069 645
- EP-A- 1 120 824
- EP-A- 1 522 957
- US-A1- 2005 019 989

## Description

The present invention relates to an identity document comprising a support provided with a chip and antenna, such as a page or card, said support comprising a plastics material wherein said chip comprising an antenna is accommodated, wherein between said chip and said plastics material there is arranged a buffer layer.

An identity document of this type may be an identity card, banker's card, credit card, driving licence or part of a passport. Accommodated therein is a chip of which one of the purposes is the storage of personal data which could be compared with personal data provided in the identity document in a different manner, such as a photo, fingerprint and the like.

It is important for the support to be able to be arranged around the chip in a simple manner. It is also important for an identity document of this type to have adequate mechanical characteristics and an adequate service life. In addition, an identity document of this type should be simple to produce with limited costs. In some cases, it is also stipulated that it must be possible to laser-engrave the plastics material used for the support, i.e. it must be possible to transform, using a laser, specific portions of the plastics material, so said portions appear different, for example are coloured black by carbonisation.

In the prior art, polycarbonate (PC) is often used as the plastics material for the support material, whereas known alternatives include acrylonitrile butadiene styrene (ABS), polyvinyl chloride (PVC) and polyester (PET).

Especially if polycarbonate is used, but also in other of the aforementioned materials, it has been observed that during the cooling phase following the provision of the plastics material around the chip - which takes place in the temperature range of from 100 to 200 °C, depending on the method and plastics material used - deformations are produced and cause undulation in the material (deformation in the card) at the location of the chip.

It has also been observed that, under specific circumstances, cracks may appear in the support material, immediately during production or at a later stage. Such cracks may be small hairline cracks but they can develop to form larger cracks. Although these imperfections do not straight away adversely affect the cohesion of the card, they do mar its appearance because dirt and the like accumulates therein.

US 2005/0019989 A1 discloses a method for producing a module wherein an electronic component is accommodated. This electronic component is positioned in a cavity over which there is placed a compressible material in order to improve the correct positioning in the cavity.

It is known from EP 0952542 to position on a component a flexible sheet consisting of a thermosetting epoxy resin containing no filler.

The aim of the present invention is to eliminate the problem of stress cracking.

In the above-described identity document, this aim is realised by an identity card according to claim 3 of the invention. Advantageously when the processing temperature of said support is lowered to -40 °C, the differences in shrinkage produced between said buffer layer and said chip are compensated for and shrinkage tensions in the plastics material are thus prevented or reduced in such a way that they do not lead to the formation of hairline cracks.

It has been found that the formation of cracks or the warping of the identity document occurs at the location of the chip as a result of tensions. It is assumed that such tensions are produced as a result of the various shrinkage characteristics of the plastics materials used for the support and of the chip as a whole. It is assumed that the difference in these cooling characteristics, at the moment of production until use, can lead to local tensions which may initiate cracks and may cause local warping of the identity document, such as a card. An identity document of this type should be usable even at low temperatures of between -40 and -25 °C, depending on the application. The processing temperature is in the range of from 100 to 200 °C. The provision, in accordance with the invention, of a buffer layer between the plastics material of the support and the chip allows tensions of this type to be minimised. The buffer layer preferably consists of a plastics material able to accommodate differences in shrinkage tensions.

Shrinkage tensions can be accommodated in various ways. According to a first embodiment of the invention, it is possible to provide a deformable buffer layer, i.e. a layer of material, the volume of which is reduced under pressure. A porous material is adequate for this purpose. A porous material of this type can be provided as a surrounding layer together with the chip in the support. However, it is also possible for a porous material of this type to be produced during production, when the plastics material is arranged around the chip, for example by the use of a foaming material.

Another possibility, which may or may not be used in combination with the above-described material of the buffer layer, is to provide a less compressible or non-compressible material which has a much higher coefficient of expansion than the plastics material of the support or which displays high shrinkage in the relevant temperature range as a result of intrinsic temperature-dependent chemical or physical changes. The shrinkage of the above-described material during cooling from the production temperature to ambient temperature is higher than that of the plastics material of the support. The size of the gap to be filled between the chip and the plastics material of the support determines the required additional shrinkage of the above-described material. According to the invention, this coefficient of expansion is at least two times greater than the coefficient of extrusion of the plastics material of the support and more particularly greater than 1.10⁻⁴ 1/ °C. Examples of such a material include polyethylene, polybutylene, polypropylene, acrylates, polyethylene glycol, polypropylene glycol, polyurethanes, unsaturated esters and epoxies.

A material of this type may be chosen as a function of the plastics material of the support, the size of the gap between the chip and the plastics material of the support and the temperature range over which the shrinkage takes place.

The above-described problem of warping occurs, above all, if the chip either has a non-symmetrical shape or is not positioned symmetrically in the support, i.e. at an equal distance from the underside and upper side thereof. It has been observed that if a buffer layer of this type is used, the identity document is substantially flat also at the location of the chip, i.e. the above-mentioned phenomena of the production of a portion raised out of the face of the support no longer occur. In addition, no crack formation is observed - not even in the case of tests simulating a longer service life of the identity document.

Tests have revealed that if polycarbonate is used as the plastics material for the support in the production by lamination of a support at a temperature of approximately 185 °C, over the course of the reduction to approximately 25°C the polycarbonate material shrinks approximately 0.8%. The shrinkage of the chip itself is less than 0.1 %. If there is a chip in the identity card, this will give rise to considerable tension in the polycarbonate material around the chip. Polycarbonate has a coefficient of thermal expansion of 7 x 10⁻⁵ 1/ °C. If a buffer material having an effective coefficient of expansion greater than that of the polycarbonate material, in particular greater than 1 x 10⁻⁴ 1/ °C, is then used, provision may be made for compensation for said shrinkage in proximity to said chip, provided that said buffer material has a suitable thickness.

buffer material has a suitable thickness.

The invention also relates to a method for producing an identity document having the features according to Claim 6.

The buffer layer may be arranged in any manner conceivable in the art. The buffer layer is preferably provided together with the chip. The plastics material may thus be attached to the chip, for example in the form of a droplet, layer of film and the like. In particular, it is possible, if the chips are supplied on a roll with connected lead frames, also to provide a layer of film pertaining thereto. A chip may be individualised by means of punching, while the respective portion of film material, which is to become a subsequent buffer layer, may be produced at the same time. A film material of this type or a different plastics material preferably has characteristics such that when the plastics material of the support is provided, said material of the buffer layer spreads along the surface of the chip.

In particular, the production of the identity document includes the lamination of a number of plastics material sheets. One or more plastics material sheets may be provided, in this regard, with an opening for the arrangement therein of the chip.

The invention also relates to a chip in accordance with claim 1, comprising an antenna, which chip is configured for the storing of personal data and the reading-out thereof, wherein there is provided to said chip a plastics material having an effective coefficient of thermal expansion greater than that of the plastics material of the support.

The invention will be described hereinafter in greater detail with reference to an illustrative embodiment represented in the drawings, in which:
Fig. 1 is a schematic perspective view of an identity document or a portion thereof;
Fig. 2 shows the various parts from which the identity document is produced; and
Fig. 3 shows a detail of the identity document at the location of the chip.

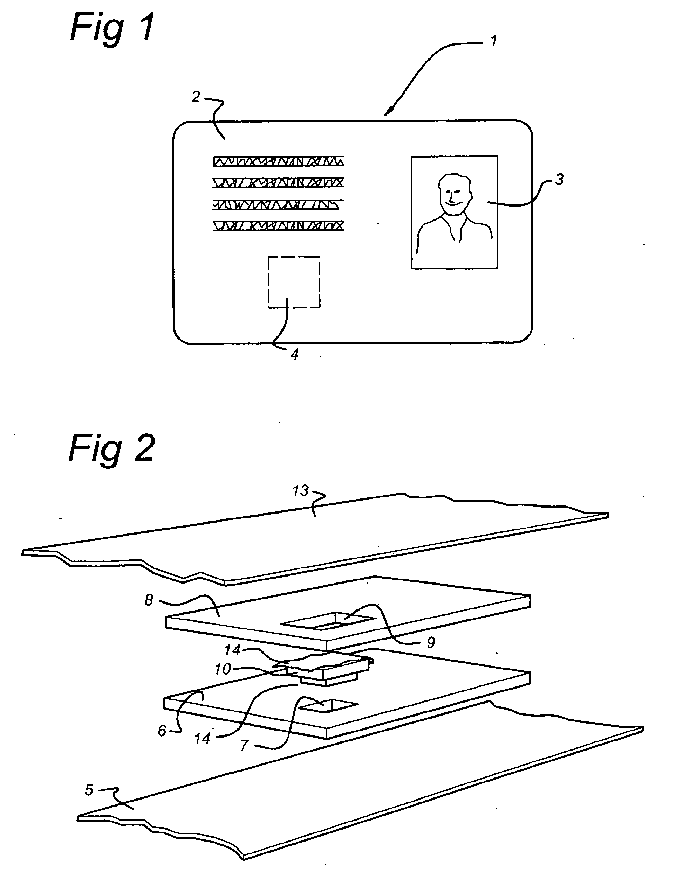

In Fig. 1, reference numeral 1 denotes an identity document. This may be any (banker's) card, credit card, driving licence or part of a passport such as a holder's page. This document consists of a plastics support material 2 with, for example, a photo 3 of the support or another biometric characteristic and further data of the rightful holder attached thereon or therein.

In addition, there is attached a completely encapsulated chip comprising an antenna 4. This chip stores further data of the holder and can be read out remotely.

Fig. 2 shows how an identity document of this type may be produced in accordance with the invention. In Fig. 2, this is illustrated on the basis of a lamination process.

used in the present invention.

There is provided a first, continuous layer 5 and a second layer 6 comprising a comparatively small opening 7. There is further provided a third layer 8 comprising a larger opening 9 and a fourth, continuous layer 13. In this example, sheets of polycarbonate are used.

There is also provided a chip 10. This chip has a comparatively large upper portion and a somewhat smaller lower portion. This is caused by the projections of the lead frame and the epoxy enclosure used. Attached to the chip is a film 14.

When the composition shown in Fig. 2 is assembled, merging of the various layers 5, 6, and 8 and 13 may then be obtained by heat and pressure using a laminating press, thus producing an integral entity and preventing the chip 10 from being removed and/or replaced without visible damage. The layer of film 14 is attached to the upper side of the chip and consists of a material such that it becomes sufficiently fluid, at the lamination temperature used, for example 185 °C, and more particularly at a slightly lower temperature, to flow in the gap between the chip and the layers 6 and 9. The material of the film 14 fuses to a buffer layer 12 extending around the chip 10.

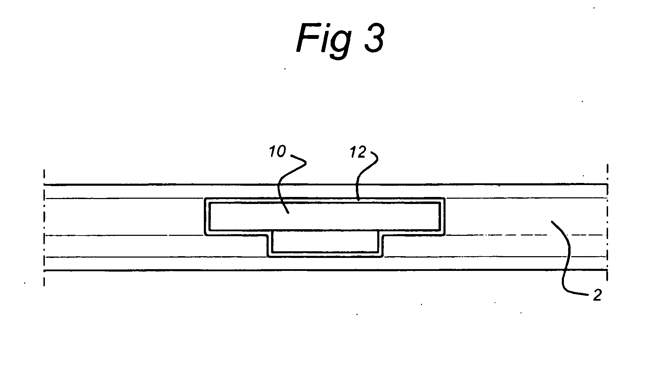

After the lamination process, the composition as shown in detail in Fig. 3 is produced.

If cooling then takes place, the difference in coefficient of thermal expansion between the support material 2 and the chip 10 will result in thermal tensions if all of the space between the chip and the plastics material of the card is filled during the lamination process. As a result of either the asymmetrical shape of the chip or the positioning of the chip at an unequal distance on the upper side or underside, respectively, of the support, these tensions may lead to the production of bulges, warping and possibly cracks.

As a result of the arrangement, in accordance with the present invention, of a buffer layer 12, these tensions are compensated to the extent that hardly any warping and/or cracks is/are observed.

The dimensions of the composition shown in the present case may, for example, be as follows: the total thickness of the card may be approximately 800 µm; the thickness of 5 or 13, respectively, may be approximately 225 µm; the layer 8 may have a thickness of 100 µm, whereas the layer 6 has a thickness of 250 µm.

The buffer layer 12 preferably has a layer thickness of at most approximately 100 µm. It will be understood that this layer thickness may vary depending on the position of the buffer material on the chip.

On reading the foregoing, a person skilled in the art will immediately think of variations which lie within the scope of the present application as described in the claims.

## Claims

1. Chip comprising an antenna (10), which chip is embodied for the storing of personal data and the reading-out thereof, **characterised in that** there is attached to said chip a buffer layer of a plastics material (14) having an effective coefficient of thermal expansion of greater than 1.10⁻⁴°C⁻¹.

2. Chip according to Claim 1, wherein said plastics material comprises a film (11).

3. Identity document (1) comprising a support (2), such as a page or card, said support comprising a plastics material in which a chip with attached buffer layer in accordance with claim 1 is accommodated, wherein the buffer layer is arranged between said chip (10) and said plastics material and said effective coefficient of thermal expansion is greater than 1.10⁻⁴°C⁻¹ in a temperature range from -40 to 200 °C during cooling.

4. Identity document according to Claim 3, wherein the support comprises a polycarbonate material.

5. Identity document according to claim 3 or 4, wherein said buffer layer comprises a porous compressible material.

6. Identity document according to any one of the preceding claims 3 - 5, wherein said buffer layer comprises one or more materials from the following group: polyethylene, polybutylene, polypropylene, acrylates, polyethylene glycol, polypropylene glycol, polyurethanes, unsaturated esters and epoxy.

7. Method for producing an identity document comprising a support provided with a chip and antenna, including the provision of said chip and antenna and the encasing thereof in a plastics material, wherein between said plastics material and said chip and antenna there is arranged a buffer layer (12), having an effective coefficient of thermal expansion of greater than 1.10⁻⁴ °C⁻¹ in a temperature range from -40 to 200 °C during cooling.

8. Method according to Claim 7, wherein the provision of plastics material includes lamination.

9. Method according to Claim 8, wherein there is provided a first continuous laminate layer (5), a laminate layer (6, 8) arranged thereon and provided with an opening (7, 9), and a further laminate layer (13) positioned thereon, said chip comprising an antenna being positioned in said opening (7, 9).

10. Method according to one of claims 7-9, wherein said buffer layer comprises a film material.

## Patentansprüche

1. Chip umfassend eine Antenne (10), wobei der Chip zum Speichern von persönlichen Daten und deren Auslesen ausgebildet ist, **dadurch gekennzeichnet, dass** am Chip eine Pufferschicht aus Kunststoffmaterial (14) angebracht ist, das einen effektiven Wärmeausdehnungskoeffizienten größer als 1.10⁻⁴ °C⁻¹.

2. Chip nach Anspruch 1, wobei das Kunststoffmaterial einen Film (11) umfasst.

3. Ausweisdokument (1) umfassend einen Träger (2), wie ein Blatt oder eine Karte, wobei der Träger ein Kunststoffmaterial umfasst, in dem ein Chip mit einer daran befestigten Pufferschicht nach Anspruch 1 aufgenommen ist, wobei die Pufferschicht zwischen dem Chip (10) und dem Kunststoffmaterial angebracht ist und der effektive Wärmeausdehnungskoeffizient beim Abkühlen in einer Temperaturspanne von -40° bis 200° C größer als 1.10⁻⁴ °C⁻¹ ist.

4. Ausweisdokument nach Anspruch 3, wobei der Träger ein Polycarbonat-Material umfasst.

5. Ausweisdokument nach Anspruch 3 oder 4, wobei die Pufferschicht ein poröses kompressibles Material umfasst.

6. Ausweisdokument nach einem der Ansprüche 3-5, wobei die Pufferschicht eines oder mehrere Materialien der folgenden Gruppe umfasst: Polyethylen, Polybutylen, Polypropylen, Acrylate, Polyethylen-Glykol, Polypropylen-Glykol, Polyurethane, ungesättigte Ester und Epoxid.

7. Verfahren zum Herstellen eines Ausweisdokuments, umfassend einen Träger, der mit einem Chip und einer Antenne versehen ist, einschließlich des Bereitstellens des Chips und der Antenne und deren Umschließen in Kunststoffmaterial, wobei zwischen dem Kunststoffmaterial und dem Chip und der Antenne eine Pufferschicht (12) angeordnet ist, die beim Abkühlen in einer Temperaturspanne von -40° und 200° C einen effektiven Wärmeausdehnungskoeffizienten größer als 1.10⁻⁴ °C⁻¹ aufweist.

8. Verfahren nach Anspruch 7, wobei das Bereitstellen des Kunststoffmaterials ein Laminieren einschließt.

9. Verfahren nach Anspruch 8, wobei eine erste durchgehende Laminatschicht (5) bereitgestellt ist, und darauf angeordnet eine Laminatschicht (6, 8) angebracht ist, die mit einer Öffnung (7, 9) versehen ist, und eine darauf angebrachte weitere Laminatschicht (13), wobei der Chip, der eine Antenne umfasst, in der Öffnung (7, 9) platziert wird.

10. Verfahren nach einem der Ansprüche 7-9, wobei die Pufferschicht ein Filmmaterial umfasst.

## Revendications

1. Puce comprenant une antenne (10), laquelle puce est mise en oeuvre pour stocker des données personnelles et leur lecture, **caractérisée en ce que** l'on joint à ladite puce, une couche tampon de matière plastique (14) ayant un coefficient de dilatation thermique efficace supérieur à 1.10⁻⁴ °C⁻¹.

2. Puce selon la revendication 1, dans laquelle ladite matière plastique comprend un film (11).

3. Document d'identité (1) comprenant un support (2), tel qu'une page ou une carte, ledit support comprenant une matière plastique dans laquelle est logée une puce avec une couche tampon jointe selon la revendication 1, dans lequel la couche tampon est agencée entre ladite puce (10) et ladite matière plastique et ledit coefficient de dilatation thermique efficace est supérieur à 1.10⁻⁴ °C⁻¹ dans une plage de températures de l'ordre de -40 à 200 °C au cours de refroidissement.

4. Document d'identité selon la revendication 3, dans lequel le support comprend un polycarbonate.

5. Document d'identité selon la revendication 3 ou 4, dans lequel ladite couche tampon comprend une matière compressible poreuse.

6. Document d'identité selon l'une quelconque des revendications 3 à 5, dans lequel ladite couche tampon comprend une ou plusieurs matières du groupe suivait : polyéthylène, polybutylène, polypropylène, acrylates, polyéthylène glycol, polypropylène glycol, polyuréthanes, esters insaturés et époxy.

7. Procédé pour produire un document d'identité comprenant un support doté d'une puce et d'une antenne, comprenant l'étape consistant à prévoir ladite puce et l'antenne et leur enveloppement dans une matière plastique, dans lequel entre ladite matière plastique et ladite puce et antenne, on agence une couche tampon (12) ayant un coefficient de dilatation thermique efficace supérieur à 1.10⁻⁴ °C⁻¹ dans une plage de températures de l'ordre de -40 à 200 °C, au cours de refroidissement.

8. Procédé selon la revendication 7, dans lequel l'étape consistant à prévoir une matière plastique comprend une étape de stratification.

9. Procédé selon la revendication 8, dans lequel on prévoit une première couche stratifiée continue (5), une couche stratifiée (6, 8) agencée sur cette dernière et dotée d'une ouverture (7, 9), et une autre couche stratifiée (13) positionnée sur cette dernière, ladite puce comprenant une antenne qui est positionnée dans ladite ouverture (7, 9).

10. Procédé selon l'une quelconque des revendications 7 à 9, dans lequel ladite couche tampon comprend un film.
